# EUROPEAN PATENT APPLICATION

(11) **EP 4 723 419 A1**
(43) Date of publication of application: **08.04.2026**
(21) Application number: 25152350.2
(22) Date of filing: 16.01.2025
(51) Int. Cl.: H02J 3/14, C25B 1/04

(54) **CONTROLLING OF AN ELECTROLYZING PLANT HAVING AT LEAST TWO ELECTROLYZING DEVICES**

(30) Priority: 04.10.2024 EP 24204656
(71) Applicant: Siemens Energy Global GmbH & Co. KG, 81739 München (DE)
(72) Inventor: Langenberg, Nils, 90461 Nürnberg (DE); Bendig, Marvin, 90513 Zirndorf (DE); Buratckii, Artem, 90459 Nürnberg (DE); Craciun, Bogdan, 91052 Erlangen (DE); Loku, Fisnik, 90439 Nürnberg (DE); Schumann, Sven, 91452 Wilhermsdorf (DE)

(57) **Abstract**

The invention relates to a method for controlling an electrolyzing plant (10, 14) having at least two electrolyzing devices (16, 26), wherein the electrolyzing devices comprise a first and a second electrolyzing device, the method comprising:
- converting an alternating voltage of an electric power network (12) into an electrolyzing voltage, wherein converting is affected by an electric converter (22, 24) connected with the electric power network at a connection point (20),
- detecting an electric quantity with a sensor (36) at the connection point (20), wherein the electric quantity is indicative for a specific network condition,
- comparing the sensor signal (42) with at least one predetermined reference value, and
- dependent on a comparing result, a consumed electric power of the at least one first electrolyzing device is reduced and a consumed electric power of the at least one second electrolyzing device is maintained.

## Description

The invention relates to a method for controlling an electrolyzing plant having at least two electrolyzing devices, especially configured to electrolyze water by providing an electrolyzing process, wherein the at least two electrolyzing devices comprise at least one first electrolyzing device and at least one second electrolyzing device, wherein the method comprises converting an alternating voltage of an electric power network into an electrolyzing voltage for supplying the at least two electrolyzing devices with electric power of the electric power network, wherein converting is affected by at least one electric converter connected with the electric power network at a connection point, wherein the electric converter operates in a rectifying modus at least during an intended electrolyzing operation of the electrolyzing plant, detecting an electric quantity with a sensor at the connection point, wherein the sensor provides a sensor signal depending on the detected electric quantity, wherein the electric quantity is indicative for a specific network condition, and comparing the sensor signal with at least one reference value. The invention also relates to a control apparatus for controlling an electrolyzing plant having at least two electrolyzing devices, especially configured to electrolyze water by providing an electrolyzing process, wherein the apparatus is configured to be connected with least one first electrolyzing device and at least one second electrolyzing device of the at least two electrolyzing devices, wherein the apparatus is further configured to be connected with at least one electric converter which is configured to convert an alternating voltage of an electric power network into an electrolyzing voltage for supplying the at least two electrolyzing devices with electric power of the electric power network, wherein the at least one electric converter is connected with the electric power network at a connection point, wherein the electric converter is configured to operate in a rectifying modus at least during an intended electrolyzing operation of the electrolyzing plant, wherein the apparatus is further configured to be connected with a sensor configured to detect an electric quantity at the connection point and to provide a sensor signal depending on the detected electric quantity, wherein the electric quantity is indicative for a specific network condition, and wherein the apparatus is further configured to compare the sensor signal with at least one reference value. Finally, the invention relates to an electrolyzing plant having at least two electrolyzing devices, especially configured to electrolyze water by providing an electrolyzing process, at least one electric converter that is configured to be connected with an electric power network at a connection point, wherein the at least one electric converter is configured to convert an alternating voltage of the electric power network into an electrolyzing voltage for supplying the at least two electrolyzing devices with electric power of the electric power network, wherein the at least one electric converter is configured to operate in a rectifying modus during an intended electrolyzing operation of the electrolyzing plant, a sensor configured to detect an electric quantity at the connection point and to provide a sensor signal depending on the detected electric quantity, wherein the electric quantity is indicative for a specific network condition, and a control apparatus connected with the at least two electrolyzing devices, the sensor, and the at least one electric converter, wherein the control apparatus is configured to control at least power consumption of the at least two electrolyzing devices.

Methods for controlling electrolyzing plants, for instance, for producing hydrogen and oxygen by electrolyzing of water in an electrolyzing process, control apparatuses for controlling electrolyzing plants, and electrolyzing plants are well-known in the state of the art, which is why specific documents as a reference need not to be cited. The before-mentioned objects relate to providing an electrolyzing process, which is used, for example, for producing hydrogen and oxygen by electrolyzing of water. The following considerations can be also applied to such electrolyzing processes, respectively.

Electrolysis itself is provided by an electrolyzing device of the electrolyzing plant, which, in turn, comprises usually plural electrolyzing cells arranged in at least two electrolyzing devices. A group of the electrolyzing cells of a specific electrolyzing device may be arranged to form an electrolyzing module. One or more electrolyzing modules may form the electrolyzing device.

The electrolyzing cells of a specific electrolyzing device or a specific electrolyzing module, respectively, may be electrically connected at least partially in series and/or in parallel. An electric connection of the electrolyzing device may be provided such that at least some, or perhaps all, of the electrolyzing cells are subjected to a respective portion of a DC voltage or electrolyzing voltage, respectively, subjected to the electrolyzing device. The operation of generic electrolyzing cells as well as electrolyzing devices, for instance, for the use for electrolyzing of water, are well-known to those skilled in the art, such as, for instance, disclosed by DE 197 29 529 C1. The generic function of electrolysis, especially electrolysis of water, is also well known to those skilled in the art, which is why it is refrained from further detailed explanation in this specification.

An electrolyzing device has at least one single electrolyzing cell. However, common designs of electrolyzing devices require that a specific electrolyzing device has a plurality of electrolyzing cells. During the electrolyzing process, when the electrolyzing device is subjected to the suited electrolyzing voltage, which is usually a DC voltage, the electrolyzing device responds with an electrolyzing DC current flow. Especially with regard to the electrolyzing of water, during the electrolyzing process, water is consumed, and hydrogen and oxygen are produced. A value of the DC voltage usually may depend on the number of electrolyzing cells being connected in series inside of the electrolyzing device. Generally, the electrolyzing cells of one electrolyzing device are usually connected in series. Therefore, the DC current flow may depend on the applied DC voltage and the characteristics of the electrolyzing cells such as, for instance, electrical resistance, electrical impedance and aging and/or the like, of the series-connected electrolyzing cells. However, in some exemplary embodiments, the electrolyzing DC current flow may also depend on a number of electrolyzing cells being connected in parallel if applicable and/or a specific design of each of the electrolyzing cells.

Usually, an electrolyzing plant requires a respective high-power power supply during the electrolyzing process. The conditions for establishing the electrolyzing process are not easy to control which is why it is usually an intention of operators to maintain specific processing conditions and to avoid large amendments of these conditions. Therefore, controlling of the electric power network should consider these requirements for supplying the electrolyzing plant with electric energy, on the one hand. On the other hand, network requirements of the electric power network need to be also considered, such as, for example, harmonics, power factor, low voltage condition, high voltage condition, frequency deviation, and/or the like.

In this regard, it should be noted that the electrolyzing plant usually has an electric converter, for instance a rectifying device, providing an electrical coupling between the electric power network and the electrolyzing device. The electrolyzing device needs to be supplied with DC voltage, whereas, usually, the electric power network provides AC voltage, especially, a three phase AC voltage. Therefore, the electrolyzing plant has at least one electric converter, which receives the AC voltage and, in response, provides the DC voltage. Moreover, the electrolyzing plant may include one or more transformers, in order to transform the AC voltage before rectifying.

For the purpose of rectifying as such, the electric converter may be of the line-commutated type which may have switching elements such as, for example, thyristors, diodes and/or the like, or the electric converter may be of the self-commutated type which may have transistors as switching elements such as, for example, insulated gate bipolar transistors (IGBT), field effect transistors (FET) such as, for instance, metal oxide semiconductor field effect transistors (MOSFET), and/or the like, respectively. The switching elements can be controlled in order to adjust a specific electric power to be supplied to the electrolyzing device.

It should be further considered that the number of installed electrolyzing plants and existing electric power networks continuously increases. With regard to the global warming range, it is preferred to accelerate the production of green hydrogen. Simultaneously, the share of power electronic based units like renewable energy systems also increases leading to a decrease in grid stability. Consequently, electric power network operators consider defining requirements for the connection or large electrolyzing plants in existing electric power networks, in order to ensure a stable grid operation. Some of the basic requirements that are defined relate to the fault-right-through (FRT) requirements, which define operation areas, when an electrolyzing plant needs to stay connected at a respective electric power network, and operation areas where the electrolyzing plants are allowed being disconnected from the electric power network. Additionally, initial specifications and requirements such as the power factor are defined as well. At least some of the new requirements for load systems further consider requirements for existing photovoltaic farms and wind farms. Additionally, requirements regarding other grid operations are defined. In this regard, frequency stabilizing operations such as a so-called limited frequency sensitive mode (LFSM) are provided requiring adjustment of active power consumption and/or reactive power. Another grid stabilizing function is power oscillation damping (POD-P, POD-Q), wherein the active power intake and/or reactive power intake of the electrolyzing plant needs to be adjusted to counter-act against frequency active and/or reactive power oscillations in the grid.

Usually, the electrolyzing device requires a high DC current, for instance, in a range of about single-digit kA through about low double-digit kA. The situation may become even more serious when considering a trend that most of the countries of the world are replacing existing conventional power plants by renewable energy sources, which further decreases a strength and a stability of the electric power network.

In case of system perturbations of the electric power network, such as, for instance, a voltage drop, a brownout, an overvoltage condition, a frequency deviation, or the like, supporting capabilities for stabilizing the electric power network by photovoltaic farms, wind farms and/or the like may not be sufficient to ensure a stable operation of the electric power network. In this regard, it is considered to provide new requirements for electrolyzing plants, which may make compulsory not only reactive power support requirements.

Moreover, large flexible loads connected to the electric power network, or grid, respectively, in particular electrolyzing plants, may cause a substantial effect on the security and/or stability of the operation of the power supply network, especially, in case that the operation of the electrolyzing plant be not flexible with requirements regarding the operation of the power supply network. For example, during power supply network faults caused by different reasons, the alternating voltage and/or its frequency may differ from a rated value. However, the electrolyzing plant shall stay connected and permanent disconnection shall be avoided. Additionally, grid stabilizing measures shall be performed by the electrolyzing systems.

For this reason, flexible load electrolyzing plants such as large-scale electrolyzing plants need to stay connected during a voltage fault and continue their operation after the fault is cleared. For this purpose, the electrolyzing plants need to be able to ride through faults and, may, for instance, contribute with specific services that can enhance the grid stability.

This shows that providing electric power network services such as FRT and reactive current injection during fault could allow enabling more installation of large-scale electrolyzing plants resulting in more installed capacities and harmonization with the grid operation. Insofar, the installed capacities of electrolyzing plants are modest and not exceeding several tens of MW in size, but with the present desire with regard to decarbonization policies in different sectors, large-scale electrolyzing plants are more and more expected to be added to the power supply network.

In both cases detailed before, only the ride through the fault may be achieved. However, further important requirements, especially, with regard to the frequency of the alternating voltage of the electric power network will not be sufficiently considered.

In this regard, it is an object of the invention to provide a method, an apparatus, as well as an electrolyzing plant, which may further support stable operation of the electric power network, especially with regard to the frequency of the alternating voltage of the electric power network. It is especially an object to improve stable operation of the electric power network with regard to LFSM-U, LFSM-O, POD-P and POD-Q functionalities.

As a solution, a method, an apparatus, and an electrolyzing plant according to the independent claims are proposed.

Further exemplary embodiments can be derived from the features of the dependent claims.

With regard to a generic method, it is proposed that, dependent on a comparing result, a consumed electric power of the at least one first electrolyzing device is reduced or increased and the consumed electric power of the at least one second electrolyzing device is maintained.

With regard to a generic control apparatus, it is proposed that, dependent on a comparing result, the apparatus is further configured to reduce or increase a consumed electric power of the at least one first electrolyzing device and to maintain the consumed electric power of the at least one second electrolyzing device.

With regard to a generic electrolyzing plant, it is proposed that the control apparatus is configured according to the invention.

Among others, the invention is based on the consideration that the conventional power plants are replaced by renewable energy sources, the equivalent grid strength of the electric power network for large loads is decreasing. This situation can lead to situations where the frequency of the alternating voltage of the electric power network can more often be susceptible to changes in the electric power network. Therefore, controllable power consumption units such as electrolyzing plants can manipulate the frequency of the alternating voltage of the electric power network as well as act in power oscillation damping manner by adjusting their active power intake and/or reactive power intake. In general, this may be a collected effort, since all loads of the electric power network may be required to act in the required way. By decreasing the power intake, the grid frequency can be boosted to higher values. This is similar to power generating units increasing their power output. Just as well, it may be possible to reduce the frequency of the alternating voltage of the electric power network by increasing the power intake by the power consumption units, similar to decreasing the power output of power generating units. The required power consumption adjustment may follow a droop control depending on the measured frequency deviation and the current power intake.

These functions need to be provided at the point of connection (PoC) or connection point, respectively, which is the connection between the electric power network and the power consumer such as the electrolyzing plant. Usually, the currently sold and in future planned electrolyzing plants consist of multiples of electrolyzing arrays as a smallest individually adjustable power consumption unit which may correspond to the electrolyzing devices. The connection to the same PoC allows coordination of the grid supporting actions. Up to now, each converter system of the subsystem or electrolyzing device, respectively, may be additionally used for supporting an appropriate functionality of the electric power network. However, frequent changes in a specific power setpoint of the electrolyzing devices usually have an impact on ageing behavior of single electrolysis cells of that electrolyzing device which is why such changes are usually avoided and kept to a minimum. As a result, a centralized coordination of the at least two electrolyzing devices, especially multiple electrolyzing devices, where only a few of them actively participate in providing system functions has a positive impact on the overall ageing behavior from a plant perspective. Additionally, the invention may also cause limiting overshoots of measures towards the electric power network, since a centralized control apparatus can exactly determine the necessary power adjustment and distribute the action accordingly.

The invention further focuses especially on the aspect of frequency stabilizing measures, namely, limited frequency sensitivity modes (LFSM) for over and/or under frequency. Additionally, invention further focuses especially on the aspect of power oscillation damping (POD), namely, for active and reactive power, as well as FRT capability and reactive current input during fault.

The invention further considers that an excess of electric energy may lead to increasing of the frequency of the alternating voltage of the electric power network, whereas a lack of electric energy causes decreasing of the frequency. Therefore, if an excess of energy is present, increasing of energy consumption may counteract the tendency of increasing the frequency. The same is when a lack of energy is present, reduction of energy consumption may counteract the tendency of decreasing the frequency. Therefore, controlling of energy consumption at the consumer site may support stability of the frequency of the alternating voltage of the electric power network.

In this regard, the invention considers that electrolyzing plants usually may establish a great power consumption. The invention is further directed to the consideration that the electrolyzing plant usually consists of at least two electrolyzing devices, especially, the electrolyzing plant may consist of a plurality of electrolyzing devices. A further consideration deals with the fact that the electrolyzing devices may be controlled independently so that the electrolyzing devices need not operate at the same operating point. By use of the control apparatus, it is possible to operate each of the electrolyzing devices independently at a specific operating point so that, by adjusting the power consumption of each of the electrolyzing devices in a specific way, it is possible to adjust the power consumption of the whole electrolyzing plant. In this regard, the electrolyzing plant can be used to stabilize the electric power network, especially stabilizing the frequency of its alternating voltage at a predetermined rated value.

The electrolyzing plant has at least one electric converter which has an AC-side which may be configured to be connected with the electric power network at the connection point, and has a DC-side which may be connected with at least one of the electrolyzing devices. In a preferred embodiment, each electrolyzing device may comprise its own electric converter, wherein the AC-sides of each of the electric converters are electrically configured to be connected with the connecting point. Their DC-sides may be configured to be connected with the respective electrolyzing mechanisms. In a specific embodiment, it may be possible that the electrolyzing plant has only one electric converter, which couples the connection point with a DC-bus bar, wherein the electrolyzing devices are electrically coupled with the DC-bus bar. However, the electric converter may have one or more converter modules, wherein each of the converter modules may be configured to provide a specific energy conversion. The converter modules may be connected with each other in parallel. The electrolyzing plant has the connecting point which is configured to be connected with the electric power network. The connecting point is preferably adapted for a single phase or a multiphase-alternating voltage of the electric power network.

The at least one electric converter is configured to operate in a rectifying modus at least during an intended electrolyzing operation of the electrolyzing plant. The intended electrolyzing operation of the electrolyzing plant, especially, includes that the electrolyzing plant consumes a specific amount of electric energy in order to produce electrolyzing products such as for instance, hydrogen and oxygen by electrolyzing of water. The intended electrolyzing operation differs from an off-status of the electrolyzing plant in which no electrolyzed products are provided.

The electrolyzing plant also has a sensor which is configured to detect an electric quantity at the connection point. The electric quantity may be a voltage value of the alternating voltage, for example, a peak value, a value of an amplitude of the alternating voltage, a rms value, a frequency of the alternating voltage, a reactive power, harmonic distortions and/or the like. The sensor provides a sensor signal depending on the detected value of the electric quantity. Preferably, the electric quantity is indicative for a specific network condition, especially, related to a stability of the electric power network, especially, the frequency. The sensor signal is compared with at least one reference value which may be a reference frequency when the electric quantity is the frequency of the alternating voltage of the electric power network.

Depending on a comparison result, a consumed electric power of the at least one first electrolyzing device is reduced or increased, and the consumed electric power of the at least one second electrolyzing device is maintained. In this regard, the invention considers that the electrolyzing devices may be operated in different operating points. This allows maintaining an operating point of some of the electrolyzing devices, especially, the second electrolyzing devices, wherein some other of the electrolyzing devices, namely, the first electrolyzing devices, are controlled such that power consumption is adapted that is, the power consumption is reduced or increased, respectively. Reducing or increasing depends on the comparison result. In this regard, it is possible to provide a stabilizing functionality by specific operation of the electrolyzing plant, on one hand, and, on the other hand, a number of changes of the operating points of the electrolyzing devices may be reduced. Reduction of the changes can be achieved by changing the power consumption of only a few of the electrolyzing devices if this is appropriate, namely, the at least one first electrolyzing device. Only the first electrolyzing devices may be changed with regard to their operating points. The second electrolyzing devices may be operated still at their present operating point.

The inventive method can be provided by the inventive control apparatus, which is configured to provide the respective method steps. The control apparatus may be configured to be connected with the at least one electric converter and the sensor. Moreover, the control apparatus may be configured to be connected with a control station of the electrolyzing plant and/or of the electric power network. The sensor signal may be an analog signal or a digital signal. The sensor signal is compared with the at least one reference value by providing a comparing result. Comparing can be provided by the control apparatus, which may have, for this purpose, a comparing portion. The comparing portion may be a component of the control apparatus or at least of the electrolyzing plant, especially, of the at least one electrolyzing device. The control apparatus may provide the comparing result. For comparing, the sensor signal may be processed such that a rms (route mean square) value, an amplitude value, an average value or the like may be the result.

The control apparatus for controlling the electrolyzing plant may be an electronic control apparatus, a control station, or the like. The control apparatus may comprise an electric hardware circuitry in order to provide the required functionality. Moreover, the control apparatus may also comprise a programmable computer being configured to provide at least partially the required functionality. Also a combination of a hardware circuitry and a programmable computer may be provided.

The inventive method may consider further aspects. One further aspect may be clustering of the electrolyzing devices into groups having a specific priority based on electrolyzing cell conditions assessment, specific electrolyzing technology, operating point, system characteristics in general, as well as features of downstream processes such as types of compressors connected, buffer tank filling levels, and/or the like. A further aspect may be a general coordination function, wherein providing a ranking of the electrolyzing devices and assessment of necessary actions. Yet a further aspect may deal with selection of the first electrolyzing devices, which are determined to participate in providing the support functions for the electric power network.

Especially with regard to the first aspect, one feature may be the condition-based decision, which of the electrolyzing devices are determined to be first electrolyzing devices which operating point may be varied as required. One underlying rationale may be that, at end of life (EoL), an electrolyzing device may have aged cells where a small deviation in a current setpoint leads to a relatively large change in the electrolyzing voltage and thus a power-intake change can be achieved by only a small change in electrolyzing current and thus produced electrolyzing products. Power set point may be needed to adjust a larger amount of power set point as compared to cells at begin of life. Also, it can be considered that electrolyzing devices having electrolyzing cells towards the end of life may have a lower efficiency as compared with such electrolyzing devices having electrolyzing cells at begin of life (BoL). So, an increased aging due to participation of the support functionality may be tolerated easier for such electrolyzing devices having electrolyzing cells at end of life as compared with electrolyzing devices having electrolyzing cells at begin of life. This may also consider that at end of life, such electrolyzing devices may have a lower remaining lifetime and thus, an impact of increased aging is smaller. In this regard, the invention may advantageously consider specific conditions of the electrolyzing devices, especially with regard to aging.

The control apparatus may process already present measurements of current and voltage in order to determine an aging of a specific electrolyzing device. For example, depending on a resulting electrolyzing voltage for a given electrolyzing current, this information may be transmitted to the control apparatus, wherein the control apparatus may consider this information for the decision that this specific electrolyzing device may be allocated as a first electrolyzing device or a second electrolyzing device. Also, these values may be, especially continuously, collected and analyzed by a control station of the electrolyzing plant or by a specific device controller of the electrolyzing devices. A specific optimization algorithm can analyze these data in order to optimize the decision and the control of specific supporting operations distributed over the electrolyzing devices. This may be repeated, for example, daily or weekly, or if a specific event occurs such as an unplanned service or outage of a specific electrolyzing device. Also, it is possible to use a real-time capable algorithm.

Further status values such as operating point by OLTC (on load tap changer) position, operating set point, or process water stack outlet temperature, may be considered in order to provide a priority ranking. Dependent on the priority ranking, the electrolyzing devices may be allocated to the first group comprising the first electrolyzing devices or to the second group comprising the second electrolyzing devices. It also possible that ranking is provided for the first group only.

Insofar, the at least one first electrolyzing device and the at least one second electrolyzing device may define classes or clusters, respectively, of electrolyzing devices, which may be operated in a specific manner for this specific class.

According to an exemplary embodiment, it is proposed that the consumed electric power of the at least one second electrolyzing device is a rated electric power. In this regard, the operating point of the second electrolyzing device can be an optimal operating point, which may cause a very small aging. The second electrolyzing device may be operated in a stable manner. The at least one second electrolyzing device needs not participate in stabilization of the electric power network. Rather the second electrolyzing device may be operated in the intended use for establishing the electrolyzing process.

According to another exemplary embodiment, it is proposed that the electric quantity is at least a present frequency of the alternating voltage of the electric power network. In this regard, the electrolyzing plant may support a major requirement of the electric power network, namely, providing the frequency of the alternating voltage with a predetermined accuracy. For this purpose, the at least one first electrolyzing device may be controlled correspondingly.

According to yet another exemplary embodiment, it is proposed that a deterioration of the at least two electrolyzing devices is detected, and the at least one first electrolyzing device and the at least one second electrolyzing device are determined depending on the deterioration. In this regard, especially an aging status of the respective at least two electrolyzing devices can be detected and, especially those electrolyzing devices are determined to be first electrolyzing devices, which have a high aging status. Moreover, such electrolyzing devices, which may have a low aging status, may be determined as being the at least one second electrolyzing device. This determination allows using the at least one first electrolyzing device preferably for the supporting operation of the electrolyzing plant in order to stabilize the electric power network. If considerations in plant automation and operation require a homogeneous aging across the electrolysis plant, the classification of the individual electrolysis systems may be modified, namely, selecting the less aged system to be in the first group and the more aged systems to be in the second group. Thus leading to a leveling of the aging of the individual systems.

Moreover, it is proposed, that the deterioration comprises an efficiency of the at least two electrolyzing devices to establish the electrolyzing process. This enhances the determination step by additionally considering the efficiency of providing the electrolyzing process.

Furthermore, it is proposed in an exemplary embodiment that the at least two electrolyzing devices are configured to electrolyze water, and the at least two electrolyzing devices are allocated to the at least one first electrolyzing device and the at least one second electrolyzing device depending on a capability of a hydrogen consuming consumer. This allows providing a further dependency on the determination step, especially, if a higher consumption of electric power is needed. The higher consumption of electric power causes a higher production of hydrogen. Therefore, in this regard, it is also necessary that the additional production of hydrogen may be handled by a respective hydrogen consumer. A hydrogen consumer may be a tank, a production facility, which consumes hydrogen, and/or the like. The hydrogen consumer may be external of the electrolyzing plant. However, the hydrogen consumer may also be a portion of the electrolyzing plant.

According to yet another exemplary embodiment, it is proposed that the consumed electric power of the at least one first electrolyzing device is reduced to a value larger than about 20 % of the rated power, especially, larger than about 30 % of the rated power. Operation of the at least one first electrolyzing devices in this range allows a proper operation of the at least one first electrolyzing device by causing a little aging only. The reliability of the electrolyzing devices and the electrolyzing plant as a whole, can be improved.

Moreover, in yet another exemplary embodiment it is proposed that the electrolyzing plant has plural electrolyzing devices and a number of first electrolyzing devices depends on the comparison result. The comparison result may define determination, which of the electrolyzing devices is determined as being a first electrolyzing device. In this regard, a simple algorithm can be achieved in order to realize the invention.

In the present disclosure, a computing apparatus may, for example, be understood as a data processing device with processing circuitry. A computing apparatus can therefore perform computing operations in order to process data. The computing operations may also include indexed accesses to a data structure, for example, a look-up table (LUT).

In particular, the computing apparatus may include one or more computers, one or more microcontrollers, and/or one or more integrated circuits, for example, one or more application-specific integrated circuits (ASIC), one or more field-programmable gate arrays (FPGA), and/or one or more systems on a chip (SoC). The computing unit may also include one or more processors, for example one or more microprocessors, one or more central processing units, CPU, one or more graphics processing units, GPU, and/or one or more signal processors, in particular one or more digital signal processors (DSP). The computing apparatus may also include a physical or a virtual cluster of computers or other of said apparatuses.

The computing apparatus may also comprise one or more hardware and/or software interfaces and/or one or more memory devices. Therein, a memory device may be implemented as a volatile data memory, for example, a dynamic random access memory (DRAM), or a static random access memory (SRAM), or as a non-volatile data memory, for example, a read-only memory (ROM), a programmable read-only memory (PROM), an erasable programmable read-only memory (EPROM), an electrically erasable programmable read-only memory (EEPROM), a flash memory or flash EEPROM, a ferroelectric random access memory (FRAM), a magnetoresistive random access memory (MRAM), or a phase-change random access memory (PCRAM).

According to a further aspect of the invention, a computer program product comprising instructions is provided. When the instructions are executed by a data processing system, especially, computing apparatus, respectively, the instructions cause the data processing system to carry out a method according to the invention. The instructions may be provided as program code, for example. The program code can, for example, be provided as binary code or assembler and/or as source code of a programming language, for example, C, and/or as program script, for example, Python.

According to a further aspect of the invention, a computer-readable storage medium storing a computer program product according to the invention is provided. The computer program product and the computer-readable storage medium are respective computer program products comprising the instructions.

For use cases or use situations which may appear in a method according to the invention and which are not explicitly described herein, it may be provided that, in accordance with the method, an error message and/or a prompt for user feedback is output and/or a default setting and/or a predetermined initial state is set. Especially, in applications or situations which might be possible but which are not specified specifically, it may be provided that a failure signal and/or a request for inputting a user confirmation can be output and/or a standard configuration and/or a predefined initial status can be suspended.

Advantages and effects of the inventive method also apply to the inventive control apparatus and the inventive electrolyzing plant and vice versa. Therefore, method features may also be expressed as apparatus features and vice versa.

The teaching of the present invention can be readily understood and at least some additional specific details will appear by considering the following detailed description of some exemplary embodiments in conjunction with the accompanying drawings. In the drawings, same reference characters correspond to same components and functions. In the drawings, it is shown:
FIG 1 a schematic diagram showing a first embodiment of an electrolyzing plant;
FIG 2 a schematic diagram showing a second embodiment of an electrolyzing plant;
FIG 3 a schematic block diagram of the electrolyzing plant indicating signaling inside of the electrolyzing plant;
FIG 4 a schematic diagram showing an effect of aging of an electrolyzing cell of the electrolyzing devices of FIG 1 or FIG 2; and
FIG 5 a schematic flow chart indicating a further embodiment of processing a ranking of electrolyzing devices of the electrolyzing plant according to FIG 1 or FIG 2 for participating supporting stability of an electric power network.

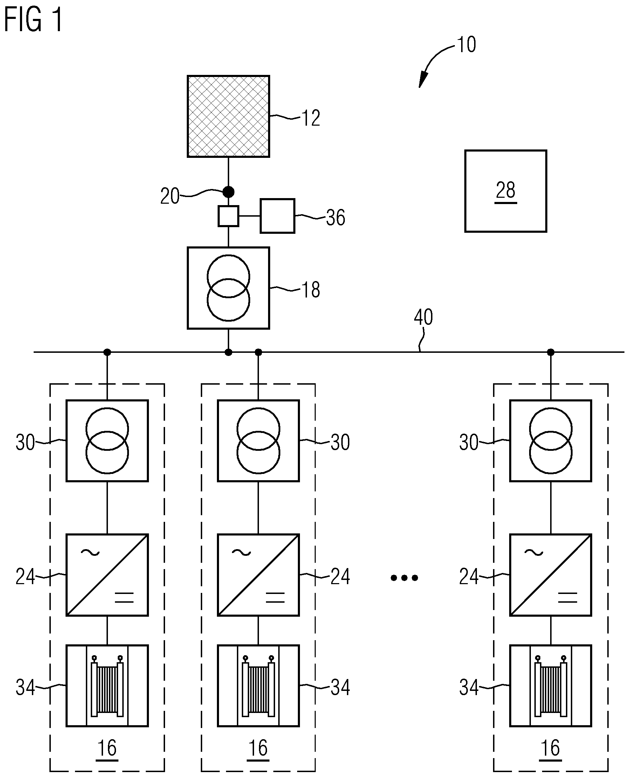

Fig. 1 shows a schematic diagram showing a first embodiment of an electrolyzing plant 10. The electrolyzing plant 10 has plural electrolyzing devices 16, which are configured to electrolyze water by providing an electrolyzing process. Compounds produced by the electrolyzing process are hydrogen and oxygen. Each of the electrolyzing devices 16 has an electrolyzing mechanism 34, which comprises a plurality of electrolyzing cells (not shown), which are electrically connected with each other in series. However, in other embodiments, it may be possible to have an electric connection between the electrolyzing cells of the electrolyzing mechanism 34 at least partially in parallel. The electrolyzing cells are usually stacked in a respective one of the electrolyzing mechanisms 34. Not shown in the figures is that each electrolyzing cell is connected with a water source of the electrolyzing plant 10, on the one hand, and is further connected with respective piping for discharging the electrolyzed products, namely, hydrogen and oxygen. The piping also belongs to the electrolyzing plant 10. In the present embodiment, it is proposed that the electrolyzing plant 10 has respective tanks (not shown) for storing hydrogen and oxygen. However, in alternative embodiments the piping may be at least partially connected with external consumers of hydrogen and/or oxygen. The external consumer may be, for instance, a hydrogen pipeline, a steel production plant or the like.

Each electrolyzing device 16 further comprises a transformer 30 and an electric converter 24 that has a DC-side, which is electrically connected with the electrolyzing mechanism 34. The electric converter 24 also has an AC-side connected with a secondary winding of the transformer 30 of the electrolyzing device 16.

The primary windings of the transformers 30 of the electrolyzing devices 16 are connected with an AC bus 40. Insofar, the electrolyzing devices 16 are connected in parallel. Moreover, in the present embodiment, the electrolyzing devices 16 have substantially the same design.

The electrolyzing plant 10 further comprises a connection point 20, which is configured to be connected with an electric power network 12. In the present embodiment, the electric power network 12 provides a three-phase alternating voltage, which has a frequency of about 50 Hz. In alternative embodiments, the frequency may be, for example, about 60 Hz.

The connection point 20 is connected with the electric power network 12. The connection point 20 is further connected to a primary winding of a transformer 18 of the electrolyzing plant 10. The secondary winding of the transformer 18 is connected with the AC bus 40. In the present embodiment, the transformers 18, 30 as well as the AC bus 40 are designed to be subjected to a three-phase alternating voltage. The same is for the electric converters 24.

The electric converters 24 are configured to convert the alternating voltage at their AC-sides into an electrolyzing voltage for supplying the respective electrolyzing device 16, especially the electrolyzing mechanism 34, with electric energy of the electric power network 12. The electrolyzing voltage is a DC voltage which value may depend on at least the number of the electrolyzing cells and their design.

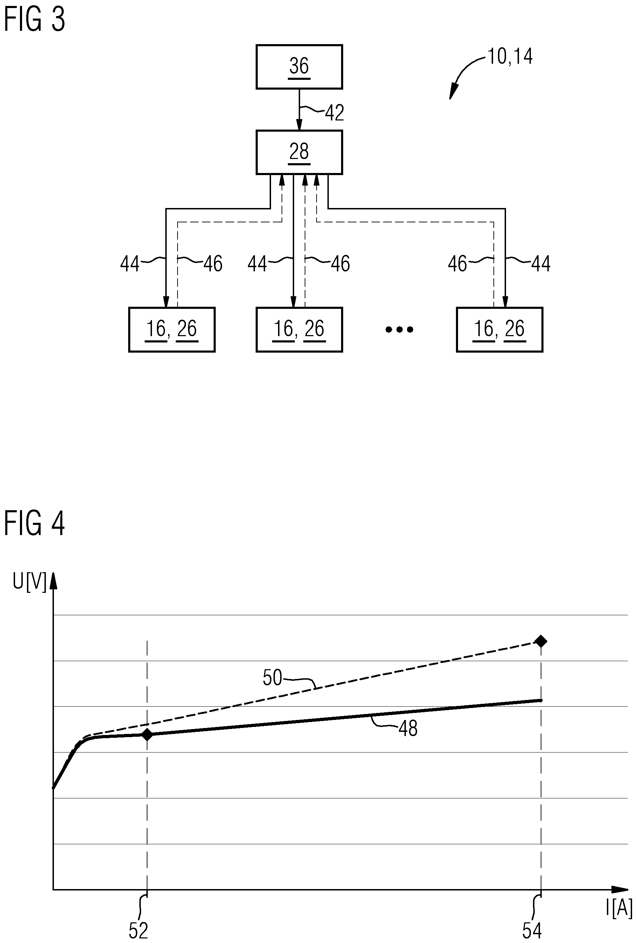

The electrolyzing plant 10 has a sensor 36, which is configured to detect an electric quantity at the connection point 20. In the present embodiment, the electric quantity is the frequency of the alternating voltage provided by the electric power network 12. The sensor 36 provides a respective sensor signal 42 (FIG 3) depending on the detected frequency. The frequency is an electric quantity, which is indicative for a specific network condition, namely, a stability of the electric power network 12.

The electrolyzing plant 10 further comprises a control apparatus 28 connected with the electrolyzing devices 16, the sensor 36, and the electric converters 24. The control apparatus 28 is configured to control a power consumption of the electrolyzing devices 16, especially, by controlling a converted power of the electric converters 24.

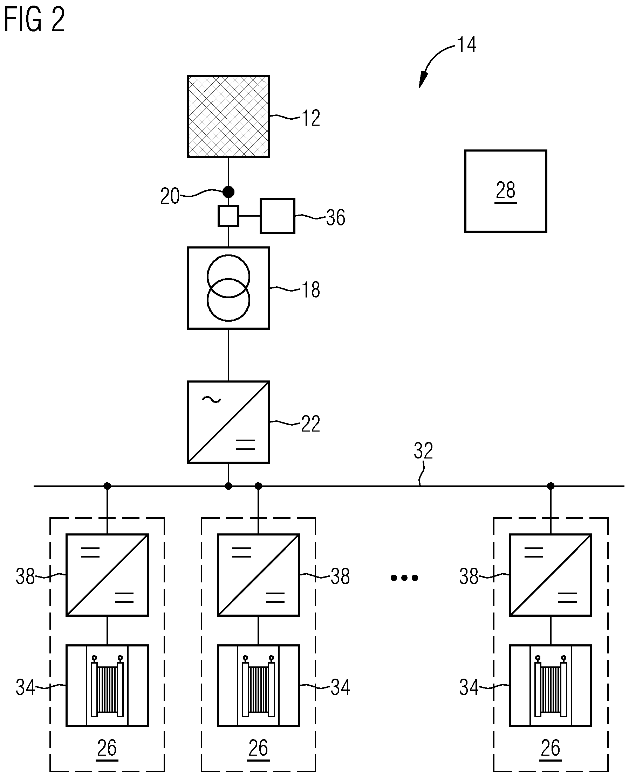

Fig. 2 shows a schematic diagram showing a second embodiment of an electrolyzing plant 14. The second embodiment of the electrolyzing plant 14 is based on the first embodiment of the electrolyzing plant 10 and rather similar to the first embodiment of the electrolyzing plant 10, which is why only the differences are detailed in the following.

A first difference is that the electrolyzing plant 14 has electrolyzing devices 26 instead of the electrolyzing devices 16 of the first embodiment. The electrolyzing devices 26 differ from the electrolyzing devices 16 by the feature that the electrolyzing devices 26 have no transformer 30. Also, the electric converters 24 of the electrolyzing devices 16 are replaced by DC/DC-converters 38, which electrically couple the electrolyzing mechanisms 34 with a DC bus 32 of the electrolyzing plant 14. In the second embodiment, the DC bus 32 replaces the AC bus 40 of the first embodiment.

Moreover, the transformer 18 is coupled with the DC bus 32 via an electric converter 22. The electric converter 22 is configured to convert the alternating voltage provided by the secondary winding of the transformer 18 into a DC voltage for supplying the DC bus 32 with electric energy of the electric power network 12. Hence, the electric converter 22 supplies the electrolyzing devices 26. The further details correspond to the details of the first embodiment of the electrolyzing plant 10, which is why it is referred to the before-mentioned details.

Fig. 3 shows a schematic block diagram of the electrolyzing plant 10, 14 indicating signaling inside of the electrolyzing plant 10, 14. As can be seen from Fig. 3, the sensor 36 provides a sensor signal, which is received by the control apparatus 28. In the present embodiment, the sensor signal 42 includes information indicative for the present frequency of the alternating voltage of the electric power network 12 at the connection point 20. Moreover, the control apparatus 28 is further connected with each of the electrolyzing devices 16, 26. The control apparatus 28 provides respective control signals 44 for each of the electrolyzing devices 16, 26. Additionally, each of the electrolyzing devices 16, 26 provides a respective status signal 46, which is received by the control apparatus 28. The status signal 46 may be indicative of a converted electric power, aging status, further operating conditions such as temperature, design, and/or the like. In this regard, the control apparatus 28 allows controlling power consumption and operation of the electrolyzing devices 16, 26. This schematic block diagram is applicable for both embodiment of the electrolyzing plants 10, 14. It shall be further noted that, in the present embodiment, the control apparatus 28 is a portion of a control center of the electrolyzing plant 10, 14, which is not shown in the figures. The control apparatus 28 gets data from the individual electrolyzing devices 16, 26, especially, their individual controllers (not shown), regarding, without limitation, their actual power consumption, data regarding their operating points, the assessment of the actual condition, and/or the like.

The control apparatus 28 ranks the electrolyzing devices 16, 26 depending on their capacity or eligibility, respectively, to participate in support functionalities related to stabilizing the electric power network 12. Especially, the control apparatus 28 gets high-resolution and high sampling-rate data related to measurements from the connection point 20, in order to analyze a present status of the electric power network 12, and assess necessary support functionality. As a combined result of this data, the control apparatus 28 updates and sends data related to power set points by use of the control signal 44 to the individual electrolyzing devices 16, 26 as well as eventually further plant-internal devices as well such as, for example, other electric loads, compression units, storage systems, and/or the like. Especially, if required, the control apparatus 28 could be bypassed in order to allow a direct set point adjustment of the individual electric converters 22, 24 by a plant controller.

In the present embodiment, the control apparatus 28 comprises a programmable computer (not shown), which functionality is determined by a computation program with respective instructions, so that the control apparatus 28 assesses the data, especially, with respect to the set points of the individual electrolyzing devices 16, 26. The computer processes the received data from the individual condition analysis of the electrolyzing devices 16, 26. Especially, the control apparatus 28 is configured to compare the sensor signal 42 with a respective predetermined reference value.

In the present embodiment, the electric quantity is determined as the frequency of the alternating voltage of the electric power network 12. However, in other embodiments, an amplitude of the alternating voltage, a rms-value and/or the like may be considered as being the electric quantity. Also, it is possible that the electric quantity may be a combination of one or more of the before-mentioned options. First and second electrolyzing devices are determined, wherein a consumed electric power of the at least one first electrolyzing device 16, 26 may be reduced or adapted depending on the comparison. Moreover, at least one second electrolyzing device is determined, wherein the consumed electric power of the at least one second electrolyzing device is maintained. So, only the at least one first electrolyzing device 16, 26 may contribute to support of stability of the electric power network 12. In the present embodiment, the control apparatus 28 is configured to provide a ranking list of the first electrolyzing devices 16, 26. Based on the ranking list, respective ones of the first electrolyzing devices 16, 26 may be activated by the control apparatus 28, in order to provide a sufficient support of stability of the electric power network 12.

Therefore, depending on the comparing result, a consumed electric power of the at least one first electrolyzing device 16, 26 is reduced and the consumed electric power of the at least one second electrolyzing device 16, 26 is maintained.

According to other embodiments, additional factors than only the frequency may be considered such as, for instance, planned service measures, features and operating conditions of downstream equipment, such as, for example, compressors, buffer tanks and/or the like, service considerations such as planned exchange of valves, electrolyzing cells, compression units and/or the like, a charging condition, and features of connected energy storage systems such as, for instance, fuel cells, batteries, capacitor banks and/or the like, the operating points and features of additional consumers, and the operating conditions and features of connected power generation units such as, for instance, photovoltaic devices, wind turbines, and/or the like. The electrolyzing devices 16, 26 may be then ranked based on this data.

The computation program may further comprise an optimization algorithm that may focus on maximizing hydrogen production, cost of hydrogen, usage of already mostly aged electrolyzing cells or electrolyzing mechanisms 34, respectively, a distribution of power among the different electrolyzing devices 16, 18, usage of the least aged electrolyzing cells or electrolyzing mechanisms 34, respectively, usage of a specific type of electrolyzing or electrolyzing technology and/or the like.

In further embodiments, other factors may also be considered to provide the ranking. For example, if an aged electrolyzing device 16, 26 is operated under full load condition, it will be higher ranked than an electrolyzing device 16, 26 being operated at partial load. According to yet another exemplary embodiment, a process water stack outlet temperature may be taken into account giving information if the respective electrolyzing device 16, 26 is already at a target operating temperature or if it is in condition of startup. During startup, a participation with regard to support functionalities may be blocked. According to yet another exemplary embodiment, an OLTC position of an individual electrolyzing device 16, 26 may be taken into account.

Based on the ranking, a determination can be made with regard to the electrolyzing devices 16, 26 such that a specific electrolyzing device 16, 26 shall be allocated to a first group related to the first electrolyzing devices or a second group related to the second electrolyzing devices 16, 26. The ranking and the allocation of a specific electrolyzing device 16, 26 to the first and the second group may be varied during operation.

One rationale for varying the allocation may consider an even distribution of an aging stress caused by the support functionality. The rationale can be to evenly distribute the stress to each of the electrolyzing devices 16, 26. In this regard, grouping may be proposed based on a tolerance band, for example, of about +/- 5%, and consider an electrolyzing system and technology in place.

According to yet another exemplary embodiment, grouping may consider electrolyzing systems of similar characteristic, and similar technology, such as, for example, PEM, alkaline and/or the like. It is also possible to exclude one or more specific electrolyzing devices 16, 26, for example, if an electrolyzing device 16, 26 is operated at a power of about 50% of the rated power. Then, an adjustable power may be limited and the aging cost power adjustment may not be justified. The value of about 50% is exemplary and may be, for example, higher than 20%, more preferable higher than 30%. According to yet another exemplary embodiment, only if all other electrolyzing devices 16, 26 are activated for participation in support functionality, and, if this is not sufficient, before-mentioned electrolyzing devices 16, 26 of the second group may also be allocated to the first group.

As a result, the control apparatus 28 may provide a ranked list of the electrolyzing devices 16, 26 in the electrolyzing plant 10, 14, wherein the ranked list may also comprise a priority for activating the electrolyzing devices 16, 26 allocated to the first group.

Fig. 4 shows a schematic diagram showing an effect of aging of an electrolyzing cell of one of the electrolyzing devices 16, 26 or electrolyzing mechanisms 34 of Fig. 1 or Fig. 2. In Fig. 4, an abscissa is allocated to an electric current, whereas an ordinate is allocated to a voltage of the electrolyzing cell. The reference character 52 indicates a lower working point of the electrolyzing cell, whereas the reference character 54 indicates an upper working point of the electrolyzing cell. A graph 48 shows the dependency of the voltage of the electrolyzing cell and the respective current during providing the electrolyzing process. The graph 48 shows the dependency for an electrolyzing cell at the beginning of life (BOL). A graph 50 shows a respective dependency of an aged electrolyzing cell, that is, at the end of life (EOL).

As can be seen from Fig. 4, advanced aging causes increasing of the electrolyzing voltage at the electrolyzing cell. This finding may be applied to the before-mentioned condition-based decision, especially, the rankling list. The underlying rationale may be that at EOL a small change in the current set point causes a respective large change of the set point for the consumed power with regard to BOL. This means that for reducing the consumed power, for example by about 10% at EOL, a lower decrease of the current set point may be necessary. As a result, the same system functionality with regard to change of active power set point reduction by a certain value may be achieved with a lower reduction of produced hydrogen.

Moreover, electrolyzing devices 16, 26 towards EOL may have a lower efficiency as compared to new electrolyzing devices 16, 26. An increased aging due to participation in support functionality may be tolerated easier for electrolyzing devices 16, 26 at EOL as compared to electrolyzing devices 16, 26 at BOL, since electrolyzing devices 16, 26 at EOL have a lower remaining life time, and thus, an impact of increased aging may be smaller. This may especially be considered if an exchange of a specific electrolyzing device 16, 26 is already planned. On the other hand, this rationale may also be used to even out the aging of the individual electrolyzing devices in an electrolyzing plant.

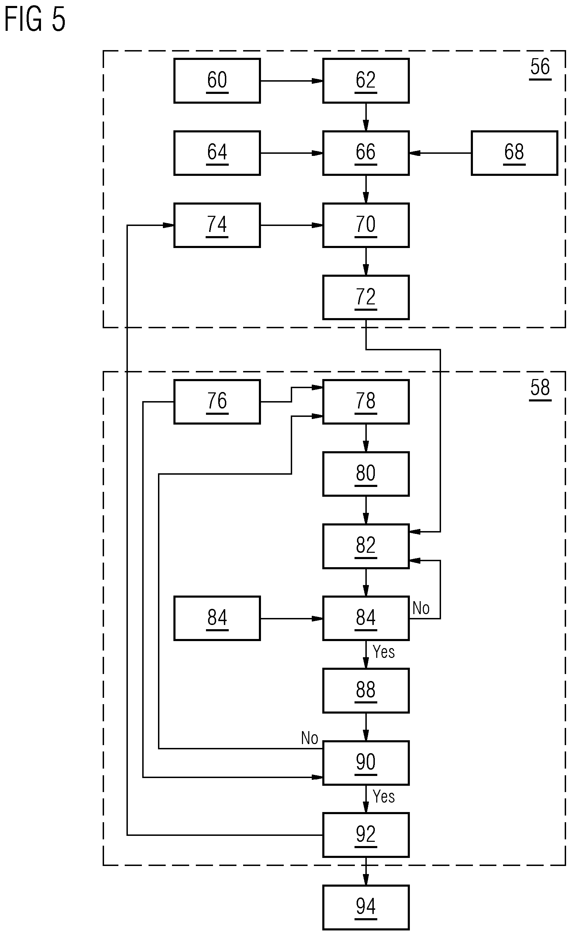

Fig. 5 shows a schematic flow chart indicating a further embodiment of processing a ranking of electrolyzing devices 16, 26 of the electrolyzing plant 10, 14 according to Fig. 1 or Fig. 2 for participating supporting stability of the electric power network 12. The method of the flow chart is executed by the control apparatus 28, especially, its computer. The flow chart comprises two flow chart portions, namely, a first flow chart portion 56, which deals with the ranking of the electrolyzing devices 16, 26 in order to allow defining of the first group and the second group, and a second flow chart portion 58, which deals with the reaction of the electrolyzing plant 10, 14 in order to support stability of the electric power network 12. The flow chart portion 56, 58 are provided by the control apparatus 28.

The method according to the first partial flow chart 56 starts with a step 60, where condition data related to the electrolyzing devices 16, 26 are accumulated. In step 62, a clustering of the data collected at step 60 is provided. Clustering may, for example, depend on a design of the electrolyzing devices 16, 26, specific rated data such as rated power, a deterioration, and/or the like. Especially, a specific cluster may comprise only those electrolyzing devices 16, 26, which have a specific design of an electrolyzing cell, a specific design with regard to energy supply, a specific design with regard to internal electric connection between the electrolyzing cells, and/or the like.

At step 64 additional decision criteria with regard to the electrolyzing devices 16, 26 are provided. These data may be stored in a specific storage. In step 68, additional decision criteria of the electrolyzing plant 10, 14 may be made available. The data, which is available by the steps 62, 64, 68, may be used in step 66 to provide and/or update a ranking list with regard to the electrolyzing devices 16, 26. The ranking list may define at least one first electrolyzing device 16, 26. In a specific embodiment, it is also possible that at least a portion of the ranking list or the whole ranking list is allocated to the first group of electrolyzing devices 16, 26 allocated to the first electrolyzing devices. In a specific embodiment, the ranking list does not comprise any second electrolyzing device 16, 26.

In step 74, a grid function participation counter is provided, which counts for each of the electrolyzing devices 16, 26, how much any of these devices has been used for stabilization functionality. This information as well as the data of step 66, especially with regard to the ranking list, is considered in step 70, which provides age-cluster alternation. In this step, it may be provided that loading of the electrolyzing devices 16, 26 with regard to stabilization functionality be equalized in order to equalize aging of the electrolyzing devices 16, 26. Based on this data, in step 72 the ranking list is updated. The updated ranking list is provided for further use by the second partial flow chart 58 dealing with the support functionality with regard to stabilizing the electric power network 12.

With regard to the second partial flow chart 58, at step 76, the sensor 36 measures the required electric quantities, especially, the frequency of the alternating voltage of the electric power network 12. Measurement is provided continuously and respective data is supplied to a step 78. In step 78, it is determined, whether a support function for the electric power network 12 is required. If in step 78 it is determined that a support functionality is required, in step 80, it is calculated, which actual power difference may be required. Dependent on the actual power difference required in step 82, by use of the updated ranking list of step 82, the highest member of the ranking list of the electrolyzing devices 16, 26 is selected. In step 84, it is established whether the possible power difference of the selected electrolyzing device is sufficient for the required actual power difference under consideration of data related to possible power difference of the selected electrolyzing devices 16, 26, which are provided by step 86. If the power of the selected electrolyzing device 16, 26 is not sufficient, the method continues with step 82 by selecting an additional electrolyzing device 16, 26 of the ranking list, namely, the next electrolyzing device 16, 26 listed in the ranking list.

If the power of the selected electrolyzing devices 16, 26 is regarded as being sufficient, in step 88, adjustment of the set points of the selected electrolyzing devices 16, 26 is provided. For this purpose, the control apparatus 28 provides the respective control signals 44 as discussed with regard to Fig. 3.

In step 90, it is investigated under consideration of the data of step 76, whether the actual power is sufficiently adjusted. If no, the method continues with step 78.

If yes, in step 92 the grid-function participation counter is updated depending on the electrolyzing devices 16, 26 which are now used for the stabilization functionality and the starter is provided in step 74 of the first partial flow chart 56. Next, at step 94, the method terminates.

As can be seen from the before mentioned embodiments, the inventive method additionally allows stabilization of the electric power network 12 by adaptation of the consumed power of the electrolyzing plant 10, 14.

The embodiments described above serve only for explanation of the inventive concept and shall not limit the scope of the invention.

## Claims

1. A method for controlling an electrolyzing plant (10, 14) having at least two electrolyzing devices (16, 26), especially configured to electrolyze water by providing an electrolyzing process, wherein the at least two electrolyzing devices (16, 26) comprise at least one first electrolyzing device (16, 26) and at least one second electrolyzing device (16, 26), wherein the method comprises:
- converting an alternating voltage of an electric power network (12) into an electrolyzing voltage for supplying the at least two electrolyzing devices (16, 26) with electric power of the electric power network (12), wherein converting is affected by at least one electric converter (22, 24) connected with the electric power network (12) at a connection point (20), wherein the at least one electric converter (22, 24) operates in a rectifying modus at least during an intended electrolyzing operation of the electrolyzing plant (10, 14),
- detecting an electric quantity with a sensor (36) at the connection point (20), wherein the sensor (36) provides a sensor signal (42) depending on the detected electric quantity, wherein the electric quantity is indicative for a specific network condition, and
- comparing the sensor signal (42) with at least one predetermined reference value, **characterized in that**,
- dependent on a comparing result, a consumed electric power of the at least one first electrolyzing device (16, 26) is reduced or increased and a consumed electric power of the at least one second electrolyzing device (16, 26) is maintained.

2. The method according to claim 1, **characterized in that** the consumed electric power of the second electrolyzing device (16, 26) is a rated electric power.

3. The method according to any one of the preceding claims, **characterized in that** the electric quantity is at least a present frequency of the alternating voltage of the electric power network (12).

4. The method according to any one of the preceding claims, **characterized in that** a deterioration of the at least two electrolyzing devices (16, 26) is detected, and the at least one first electrolyzing device (16, 26) and the second electrolyzing device (16, 26) are determined dependent on their deterioration.

5. The method according to claim 4, **characterized in that** the deterioration comprises an efficiency of the at least two electrolyzing devices (16, 26) to establish the electrolyzing process.

6. The method according to claim 5, **characterized in that** the at least two electrolyzing devices (16, 26) are configured to electrolyze water, and the at least two electrolyzing devices (16, 26) are allocated to a first group of the first electrolyzing devices (16, 26) or a second group of the second electrolyzing devices (16, 26) depending on a capability of a hydrogen consumer consuming hydrogen.

7. The method according to any one of the preceding claims, **characterized in that** the consumed electric power of the at least one first electrolyzing device (16, 26) is reduced to a value larger than 20% of the rated power, especially, larger than 30% of the rated power.

8. The method according to any one of the preceding claims, **characterized in that** the electrolyzing plant (10, 14) has plural electrolyzing devices (16, 26) and a number of first electrolyzing devices (16, 26) depends on the comparison result.

9. A computer program product comprising instructions to cause a computing apparatus of a control apparatus (28) to execute the steps of a method for controlling an electrolyzing plant (10, 14) having at least two electrolyzing devices (16, 26), especially configured to electrolyze water by providing an electrolyzing process, wherein the at least two electrolyzing devices (16, 26) comprise at least one first electrolyzing device (16, 26) and at least one second electrolyzing device (16, 26), wherein the computer program product causes the computing apparatus to
- control at least one electric converter (22, 24) connected with an electric power network (12) at a connection point (20) to convert an alternating voltage of the electric power network (12) into an electrolyzing voltage for supplying the at least two electrolyzing devices (16, 26) with electric power of the electric power network (12), wherein the at least one electric converter (22, 24) operates in a rectifying modus at least during an intended electrolyzing operation of the electrolyzing plant (10, 14),
- receive a sensor signal (42) of a sensor (36) detecting an electric quantity at the connection point (20), wherein the sensor (36) provides the sensor signal (42) depending on the detected electric quantity, wherein the electric quantity is indicative for a specific network condition, and
- compare the sensor signal (42) with at least one predetermined reference value, and
- dependent on a comparing result, control a consumed electric power of the at least one first electrolyzing device (16, 26) to be reduced or increased and a consumed electric power of the at least one second electrolyzing device (16, 26) to be maintained.

10. A computer-readable medium having stored thereon the computer program product of claim 9.

11. A control apparatus (28) for controlling an electrolyzing plant (10, 14) having at least two electrolyzing devices (16, 26), especially configured to electrolyze water by providing an electrolyzing process,
- wherein the control apparatus (28) is configured to be connected with least one first electrolyzing device (16, 26) and at least one second electrolyzing device (16, 26) of the at least two electrolyzing devices (16, 26),
- wherein the control apparatus (28) is further configured to be connected with at least one electric converter (22, 24) which is configured to convert an alternating voltage of an electric power network (12) into an electrolyzing voltage for supplying the at least two electrolyzing devices (16, 26) with electric power of the electric power network (12), wherein the at least one electric converter (22, 24) is connected with the electric power network (12) at a connection point (20), wherein the electric converter (22, 24) is configured to operate in a rectifying modus at least during an intended electrolyzing operation of the electrolyzing plant (10, 14),
- wherein the control apparatus (28) is further configured to be connected with a sensor (36) configured to detect an electric quantity at the connection point (20) and to provide a sensor signal (42) depending on the detected electric quantity, wherein the electric quantity is indicative for a specific network condition, and
- wherein the control apparatus (28) is further configured to compare the sensor signal (42) with at least one predetermined reference value,
**characterized in that**,
dependent on a comparing result, the control apparatus (28) is further configured to reduce or increase a consumed electric power of the at least one first electrolyzing device (16, 26) and to maintain a consumed electric power of the at least one second electrolyzing device (16, 26).

12. An electrolyzing plant (10, 14) having:
- at least two electrolyzing devices (16, 26), especially configured to electrolyze water by providing an electrolyzing process,
- at least one electric converter (22, 24) that is configured to be connected with an electric power network (12) at a connection point (20), wherein the at least one electric converter (22, 24) is configured to convert an alternating voltage of the electric power network (12) into an electrolyzing voltage for supplying the at least two electrolyzing devices (16, 26) with electric power of the electric power network (12), wherein the at least one electric converter (22, 24) is configured to operate in a rectifying modus during an intended electrolyzing operation of the electrolyzing plant (10, 14),
- a sensor (36) configured to detect an electric quantity at the connection point (20) and to provide a sensor signal (42) depending on the detected electric quantity, wherein the electric quantity is indicative for a specific network condition, and
- a control apparatus (28) connected with the at least two electrolyzing devices (16, 26), the sensor (36), and the at least one electric converter (22, 24), wherein the control apparatus (28) is configured to control at least power consumption of the at least two electrolyzing devices (16, 26),
**characterized in that**
the control apparatus (28) is configured according to claim 9.
